# EUROPEAN PATENT APPLICATION

(11) **EP 4 765 874 A1**
(43) Date of publication of application: **24.06.2026**
(21) Application number: 24220847.8
(22) Date of filing: 18.12.2024
(51) Int. Cl.: H04R 3/12, G06F 3/16, H04R 27/00, H04M 1/60, H04R 1/10, H04R 5/02, H04R 5/033, H04R 5/04

(54) **SYSTEM AND METHOD FOR AUDIO TRANSMISSION**

(71) Applicant: Harman Becker Automotive Systems GmbH, 76307 Karlsbad (DE)
(72) Inventor: PANTHER, Heiko Gernot Albert, 76307 Karlsbad (DE); SAKRI, Shailesh, 76307 Karlsbad (DE)
(74) Representative: Westphal, Mussgnug & Partner, Patentanwälte mbB

(57) **Abstract**

A system for audio transmission comprises one or more loudspeakers, each of the one or more loudspeakers being configured to radiate sound that corresponds to a sound signal towards at least one of two listening positions related to a user of the respective system, each of the two listening positions being located at an entrance of an ear canal of the respective user, and a microphone configured to capture speech originating from a user related to the respective system, wherein the system is configured to capture a first speech signal originating from the user related to the system by means of the microphone, compress the first speech signal by means of a codec of a first type to obtain a first compressed speech signal, receive a first audio signal from a signal source, wherein the signal source differs from the microphone, transmit the first compressed speech signal via a first communication channel, and transmit the first audio signal or a compressed version of the first audio signal via the first communication channel or via a second communication channel.

## Description

### TECHNICAL FIELD

The disclosure relates to a system and method for audio transmission, in particular to a system transmitting audio signals to another system for audio transmission in a listening environment.

### BACKGROUND

A system for audio transmission in a listening environment may transmit an audio signal to another system for audio transmission in the same listening environment. The audio signal may include both a speech component captured by means of a microphone of the system for audio transmission as well as other components (e.g., music). Signals sent from one system for audio transmission to another system in the same listening environment may be transmitted uncompressed, in order to not add latency to the audio signal. An uncompressed signal, however, requires a significant amount of bandwidth. Different kinds of codecs are known, which allow to compress a signal in order to reduce the required bandwidth. Some codecs are generally better suited for compressing speech signals, while others are generally better suited for compressing other signals such as, e.g., music signals. Codecs designed for compressing music signals, for example, provide high quality reproduction of both music and speech, but require high computing power, operate on large buffer sizes, and often require look-ahead buffers. Such codecs generally add high latency. Codecs designed for compressing speech signals (which also may be referred to as voice codecs) generally provide good quality reproduction of speech signals, but are usually less suitable for reproduction of music signals. Voice codecs usually require moderate computing power, and operate on small buffer sizes, or even individual samples. The small buffer sizes generally make voice codecs well-suited for ultra-low latency applications.

There is a need for a system and method for audio transmission that provide good quality for both speech signals and non-speech signals at a receiving device, which allow transmission of speech signals with low latency, and require moderate computing power.

### SUMMARY

A system for audio transmission includes one or more loudspeakers, each of the one or more loudspeakers being configured to radiate sound that corresponds to a sound signal towards at least one of two listening positions related to a user of the respective system, each of the two listening positions being located at an entrance of an ear canal of the respective user, and a microphone configured to capture speech originating from a user related to the respective system, wherein the system is configured to capture a first speech signal originating from the user related to the system by means of the microphone, compress the first speech signal by means of a codec of a first type to obtain a first compressed speech signal, receive a first audio signal from a signal source, wherein the signal source differs from the microphone, transmit the first compressed speech signal via a first communication channel, and transmit the first audio signal or a compressed version of the first audio signal via the first communication channel or via a second communication channel.

A method for operating a system for audio transmission is disclosed. The system includes one or more loudspeakers, each of the one or more loudspeakers being configured to radiate sound that corresponds to a sound signal towards at least one of two listening positions related to a user of the respective system, each of the two listening positions being located at an entrance of an ear canal of the respective user, and a microphone configured to capture speech originating from a user related to the respective system. The method includes capturing a first speech signal originating from a user related to the system by means of the microphone, compressing the first speech signal by means of a codec of a first type to obtain a first compressed speech signal, receiving a first audio signal from a signal source, wherein the signal source differs from the microphone, transmitting the first compressed speech signal via a first communication channel, and transmitting the first audio signal or a compressed version of the first audio signal via the first communication channel or via a second communication channel.

Other systems, features and advantages of the disclosure will be or will become apparent to one with skill in the art upon examination of the following detailed description and figures. It is intended that all such additional systems, methods, features and advantages included within this description, be within the scope of the invention and be protected by the following claims.

### BRIEF DESCRIPTION OF THE DRAWINGS

The arrangements and methods may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates an arrangement comprising a plurality of systems for audio transmission arranged in a listening environment.
Figure 2 schematically illustrates speech and non-speech signals transmitted between systems for audio transmission.
Figure 3 schematically illustrates a system for audio transmission according to embodiments of the disclosure.
Figure 4 schematically illustrates a system for audio transmission according to further embodiments of the disclosure.
Figure 5 schematically illustrates a system for audio transmission according to even further embodiments of the disclosure.
Figure 6 schematically illustrates a method according to embodiments of the disclosure.

### DETAILED DESCRIPTION

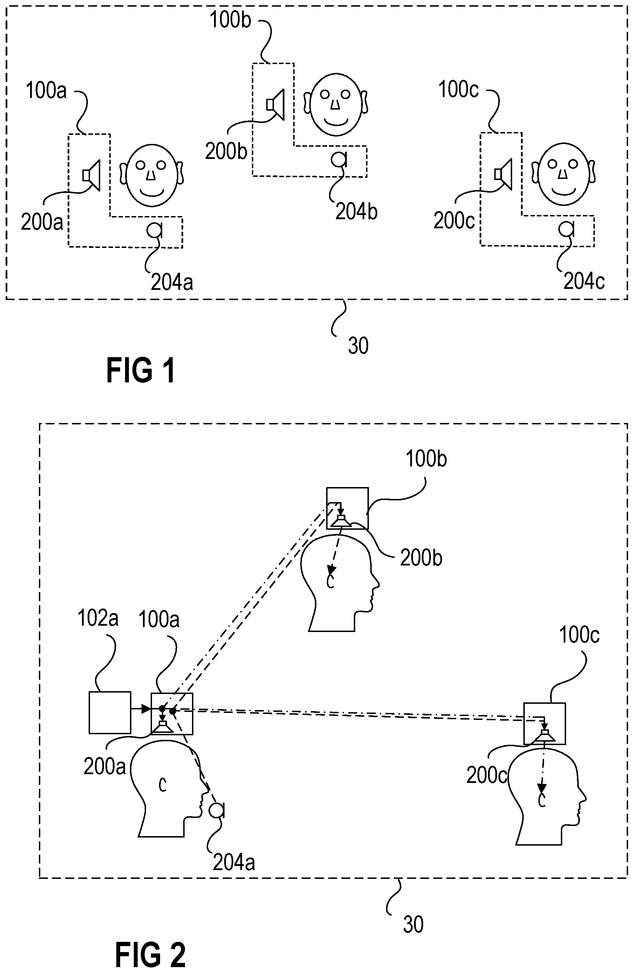

The system and related method according to the various embodiments described herein allow to transmit speech signals captured by means of a microphone of the system as well as audio signals from other sources in a way such that good quality reproduction of all signals is ensured at a receiving device. Speech signals are transmitted with low latency. The resulting overall bandwidth required for signal transmission in the system according to the various embodiments is a low as possible. Figure 1 schematically illustrates an arrangement 30 comprising a plurality of systems for audio transmission 100. In the example illustrated in Figure 1, the arrangement comprises three systems for audio transmission 100a, 100b, 100c. Generally, however, an arrangement may comprise only two, three or even more than three individual systems 100. Each system 100 in the plurality of systems 100 comprises one or more loudspeakers 200, each of the one or more loudspeakers 200 being configured to radiate sound that corresponds to a sound signal towards at least one of two listening positions related to a user of the respective systems 100, each of the two listening positions being located at an entrance of an ear canal of the respective user. According to one example, a system 100 comprises a single loudspeaker 200 that radiates sounds towards both ears of a respective user. It is, however, also possible that a system 100 comprises separate loudspeakers 200 for the different listening positions. That is, one or more loudspeakers 200 may be configured to radiate sound towards a first ear of the respective user, and one or more loudspeakers 200 may be configured to radiate sound towards a second ear of the respective user.

Each system 100 in the plurality of systems 100 further comprises one or more microphones 204 configured to capture speech originating from the user related to the respective system 100. For example, each system 100 of the plurality of systems 100 may comprise or may be a headset comprising a microphone boom arm, and the first microphone 204 of a system 100 may be arranged in the microphone boom arm. The first microphone 204, however, may be attached to the respective system 100 in any other suitable way. According to another example, the first microphone 204 is arranged in or attached to a cable or cord attached to the respective system 100. It is, however, also possible that the first microphone 204 is not directly or indirectly attached to the respective system 100 at all. According to other examples, the first microphone 204 may be attached to clothes or devices worn by the respective user (e.g., devices worn on the head, neck, or shoulders).

The first microphone 204 may be a single microphone or may include a microphone array, e.g., a beam forming microphone array. It is even possible that one and the same first microphone 204 including a beam forming array of microphones is configured to pick up speech from different users of the arrangement 30. That is, one first microphone 204 may be arranged at a suitable position and may be configured to pick up speech originating from a first user related to a first system 100a, and speech originating from at least one other user related to another system 100b, 100c of the plurality of systems 100.

According to one embodiment, each system 100 of the plurality of systems comprises or is a headset. Headsets can generally be implemented in many different ways. Some headsets comprise ear cups that are arranged to cover or surround the ears of the respective user. In this case, the one or more loudspeakers 200 may be arranged in the respective ear cups. Other headsets comprise ear buds that may be at least partly inserted into an ear canal of a user. In this case, the one or more loudspeakers 200 may be arranged in the ear buds. Other headset are known that comprise different support structures that can be used to position the one or more loudspeakers 200 with respect to the user's ears (e.g., a headband or neck band). Alternatively, it is possible, for example, that the one or more loudspeakers 200 are arranged in a headrest of a vehicle. Different systems 100 in the plurality of systems 100 may be identical or may differ from each other. That is, it is generally possible that one system 100 comprises ear cups, while another system 100 comprises ear buds. Any other combination of different systems 100 is generally possible.

The plurality of systems 100 of an arrangement 30 are all arranged in the same listening environment. The listening environment may be a passenger compartment of a vehicle, a room, or hall, for example. According to one example, an arrangement 30 as disclosed herein may be used for a multi-player gaming event, where multiple players of a video game are located in one and the same room and wish to communicate with each other. According to further embodiments, an arrangement 30 comprising two or more systems 100 may be used in a vehicle. These, however, are only examples.

In an arrangement 30 comprising two or more systems 100 in a listening environment 30, speech originating from a first user related to a first systems 100a of the two or more systems 100a, 100b, 100c is captured by the microphone 204a of the first system 100a, is transmitted to the second and any further systems 100b, 100c of the two or more systems 100a, 100b, 100c, and is output by one or more loudspeakers 200b, 200c of the respective second or further systems 100b, 100c. In addition to speech captured by the microphone 204a of the first system 100a, further audio signals may be transmitted from the first system 100a to the second and any further systems 100b, 100c of the two or more systems 100a, 100b, 100c, and may be output by one or more loudspeakers 200b, 200c of the respective second or further systems 100b, 100c. Such additional audio signals may include any audio signals originating from signal sources other than the microphone 204a of the first system 100a. For example, the system 100a may include or may be coupled to a signal source 102 (see, e.g., Figure 2), wherein the signal source is different from the microphone 204a. For example, the signal source 102 may be or may include a smart phone, a media player, or a tablet, etc. The user of the first system 100a may want to share the audio signals (audio content such as, e.g., music, telephone conversation, etc.) with another user in the listening environment for any reason.

Signals sent from one system 100 to another system 100, may generally be transmitted uncompressed, in order to not add latency to the audio signal. An uncompressed signal, however, requires a significant amount of bandwidth. Different kinds of codecs are known, which allow to compress a signal in order to reduce the required bandwidth. Some codecs are generally better suited for compressing speech signals, while others are generally better suited for compressing other signals such as, e.g., music signals. Codecs designed for compressing music signals, for example, provide high quality reproduction of both music and speech, but require high computing power, operate on large buffer sizes, and often require look-ahead buffers. Such codecs generally add high latency. Codecs designed for compressing speech signals (which also may be referred to as voice codecs) generally provide good quality reproduction of speech signals, but are usually less suitable for reproduction of music signals. Voice codecs usually require moderate computing power, and operate on small buffer sizes, or even individual samples. The small buffer sizes generally make voice codecs well-suited for ultra-low latency applications.

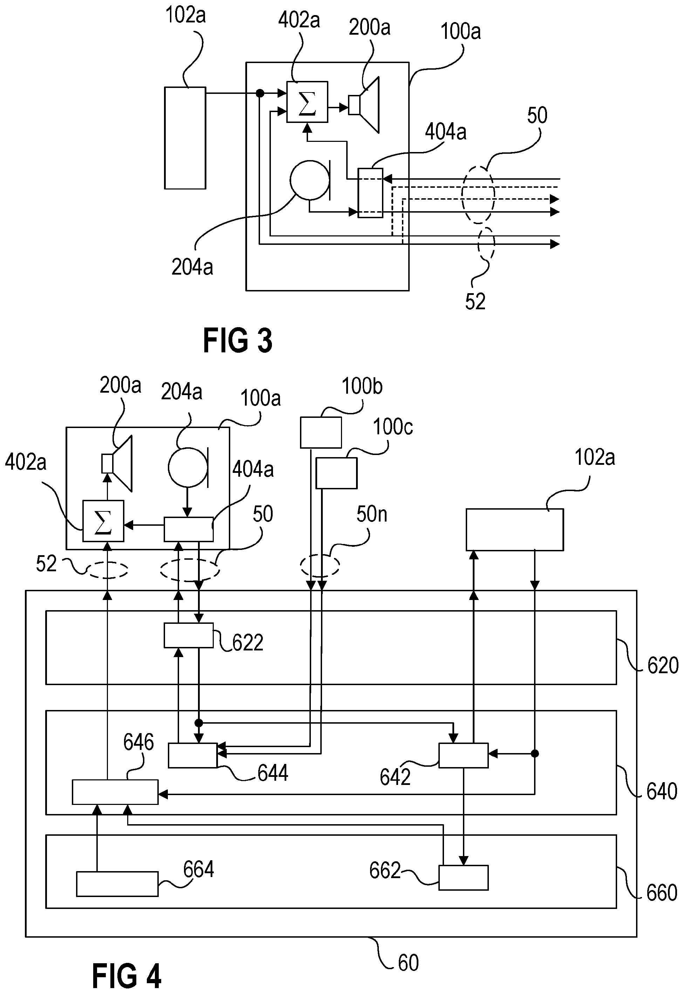

Now referring to Figure 3, a system for audio transmission 100 according to embodiments of the disclosure is schematically illustrated. The system 100 comprises one or more loudspeakers 200, each of the one or more loudspeakers 200 being configured to radiate sound that corresponds to a sound signal towards at least one of two listening positions related to a user of the respective system 100, each of the two listening positions being located at an entrance of an ear canal of the respective user. The system 100 further comprises a microphone 204 configured to capture speech originating from a user related to the respective system 100. The system 100 is configured to capture a first speech signal originating from the user related to the system 100 by means of the microphone 204, compress the first speech signal by means of a codec of a first type to obtain a first compressed speech signal, receive a first audio signal from a signal source 102, wherein the signal source 102 is different from the microphone 204, transmit the first compressed speech signal via a first communication channel 50, and transmit the first audio signal or a compressed version of the first audio signal via the first communication channel 50 or via a second communication channel 52.

In the systems for audio transmission 100 according to the various embodiments disclosed herein, speech originating from the user related to the system 100 and captured by means of the microphone 204 is not mixed with additional audio signals before being transmitted to one or more other systems 100 in an arrangement 30 comprising a plurality of systems 100. The speech originating from the user related to the system 100 and captured by means of the microphone 204 is transmitted via a first communication channel 50. Other audio signals other than speech signals captured by means of the microphone 204 may also be transmitted via the first communication channel 50. Such audio signals, or compressed versions of such audio signals, however, are transmitted independent of the speech signals. It is also possible that audio signals other than speech signals captured by means of the microphone 204 be transmitted via a second communication channel 52 that differs from the first communication channel 50 through which the speech signals captured by means of the microphone 204 are transmitted. In this way, speech originating from the user related to the system 100 and captured by means of the microphone 204 can be compressed by means of a codec of a first type. Any other audio signals on the other hand may be transmitted uncompressed, or may be compressed by means of a codec of a second type. If, for example, the first compressed speech signal is transmitted via a first communication channel 50, and the first audio signal or a compressed version of the first audio signal is transmitted via a second communication channel 52 that is different from the first communication channel 50, the first communication channel 50 may be a bandwidth constrained ultra-low latency channel, while the second communication channel 52 is not bandwidth constrained. If the same communication channel is used for transmission of all signals, a communication channel may be used that is equally suitable for transmission of speech signals as well as for transmission of any other kind of audio signals. In this case, low latency for the speech signals can still be achieved by using different codecs for compressing the respective signals. According to some examples it is even possible that speech signals captured by means of the microphone 204 and other audio signals are all compressed by means of the same codec, but are transmitted separately via different communication channels.

For speech originating from the user related to the system 100 and captured by means of the microphone 204 latency is generally critical. That is, low latency is desirable for the speech signal. The codec of the first type therefore may be a low-latency codec. That is, the codec of the first type may be a codec designed specifically for signals and applications where low latency is crucial. Known Low Latency or Ultra-Low Latency VoiceCodecs include, but are not limited to G.722, G.726, and G.728.

Low latency codecs provide good quality reproduction of speech signals, but are usually less suitable for reproduction of other audio signals such as, e.g., music signals. The claimed system, therefore, does not mix the additional audio signals with the speech originating from the user related to the system 100 and captured by means of the microphone 204 before being transmitted to one or more other systems 100 in an arrangement 30 comprising a plurality of systems 100. The remaining audio signals may either be transmitted uncompressed, or may be compressed by means of a codec of a second type that is different from the codec of the first type. The codec of the second type may be a low bandwidth codec, for example. Latency is generally not critical for the additional audio signals. Instead, it may be desirable that the required bandwidth is reduced. Different low bandwidth or low bitrate codecs are generally known. Examples for low bandwidth codecs are AAC, SBC (Low Complexity Subband Codec), LC3 (Low Complexity Communication Codec), MP3, and aptX. Many other low bandwidth codecs are known and can be used instead.

In this way, a codec especially suited for speech signals is used for the speech signal, and another codec especially suited for audio signals (e.g., music signals) is used for the remaining audio signals. The different signals are transmitted via the same communication channel 50 or via separate communication channels 50, 52. The first and second communication channels 50, 52 may be wireless communication channels. For example, the first communication channel 50 may be an ultra-wideband, UWB, communication channel, and/or the second communication channel 52 may be a Bluetooth communication channel. Other types of communication channels are generally also possible.

The system 100 may comprise a first compression/decompression unit 404 that is configured to compress the first speech signal by means of a codec of a first type to obtain a first compressed speech signal. The first compression/decompression unit 404 may be further configured to decompress any compressed speech signals received via the first communication channel 50. The system 100 may further comprise a mixing element 402 configured to mix different audio signals that are to be reproduced by means of the one or more loudspeakers 200. That is, the mixing element 402 may receive a decompressed speech signal received via the first communication channel 50 and decompressed by means of the compression/decompression unit 404. The mixing element 402 may further receive a second audio signal received via the second communication channel 52. The mixing element 402 may then mix the second audio signal and the second speech signal to obtain a first mixed signal. In addition to or instead of the second audio signal, the mixing element 402 may receive an audio signal from the signal source 102, and mix the audio signal, the second speech signal and (optionally) the second audio signal to obtain the first mixed signal. According to some examples, the audio signal received from the signal source 102 may be mixed with the second speech signal only, e.g., when no second audio signal is received via the second communication channel 52. The first mixed signal may be reproduced by means of the one or more loudspeakers 200.

As mentioned, an audio signal may be transmitted via the second communication channel 52 uncompressed or compressed. That is, instead of receiving a second audio signal via the second communication channel 52, a compressed version of a second audio signal may be received via the second communication channel 52. The system 100 may be further configured to decompress the processed version of the second audio signal by means of the codec of the second type to obtain a second audio signal, mix the second audio signal and the second speech signal by means of the mixing element 402 to obtain a first mixed signal, and reproduce the first mixed signal by means of the one or more loudspeakers 200. A second compression/decompression unit that is configured to compress an audio signal that is to be transmitted via the second communication channel 52, or to decompress a second compressed audio signal received via the second communication channel 52 is not explicitly illustrated in Figure 3.

In an arrangement 30 comprising two or more systems for audio transmission 100, each system 100 may transmit and receive signals from each of the other systems 100 in the arrangement. This is schematically illustrated in Figure 2. For example, one user related to a first system 100a may want to engage in a conversation with one or more other users related to other systems 100b, 100c in the arrangement 30. A user of a system 100a in the arrangement 30 may further want to share further audio content from a signal source 102 with one or more other users related to other systems 100b, 100c in the arrangement. For example, a user may want to share music with one or more other users and, at the same time, talk to the one or more other users. According to another example, a user may be in a telephone conversation with a person who is not a user of a system 100 of the arrangement 30. The user may want to include one or more other users related to systems 100 in the arrangement 30 in the telephone conversation. Speech related to such (external) telephone conversation may be transmitted to other systems 100 of the arrangement uncompressed or may be compressed by means of a codec of a second type and transmitted via the second communication channel 52. Low latency is usually only critical for speech captured by means of the microphone 204, but not for speech received from different signal sources 102.

Two systems 100 in the plurality of systems 100a, 100b, 100c may be directly connected to each other, or may be connected to each other via a connector unit 60 (star connection). A system 100a connected to a connector unit 60 is exemplarily illustrated in Figure 4. That is, the system 100a transmits the compressed speech signal to the connector unit 60 via the first communication channel 50. Very generally speaking, the connector unit 60 is configured to forward the compressed speech signal to another system 100 of the plurality of systems 100a, 100b, 100c of the arrangement 30. The connector unit 60 receives the compressed speech signal from the first system 100a via the first communication channel 50, and transmits the compressed speech signal to another system 100b, 100c of the plurality of systems 100a, 100b, 100c via a first communication channel 50. The compressed speech signal may be decompressed by the other system 100b, 100c and may be mixed to another audio signal, similar to what has been described with respect to Figure 3 above.

The connector unit 60 may comprise a wireless audio unit, WAU, 620, a mixing unit 640, and an additional signal unit 660, for example. The WAU 620 may be configured to transmit and receive compressed speech signals from a system 100 of the two or more systems 100a, 100b, 100c via a first communication channel 50. That is, the WAU 620 may comprise one or more transmission units 622, for example. The WAU 620 may be in wireless communication with each system 100 of the two or more systems 100a, 100b, 100c of the arrangement 30, and with one or more signal sources 102. The WAU 620 may be coupled to the mixing unit 640 by means of one or more wired connections, and the mixing unit 640 may be coupled to the additional signal unit 660 by means of one or more wired connections. That is, any components of the connector unit 60 itself are coupled to each other by means of wired connections, while the connector unit 60 is coupled to any external components, e.g., two or more systems 100a, 100b, 100c, and one or more signal sources 102, by means of wireless connections.

The mixing unit 640 may be configured to mix and amplify different signals received from different systems 100 of the arrangement 30, for example. For example, different compressed speech signals received from different systems 100 of the two or more systems 100a, 100b, 100c may be mixed to obtain a first compressed mixed speech signal. If, for example, three users related to different systems 100 of the two or more systems 100a, 100b, 100c are in a conversation with each other, the mixing unit 640, by means of a voice mixer unit 644, may mix a compressed speech signal received from a second system 100b, and a compressed speech signal received from a third system 100c, and transmit the resulting compressed mixed speech signal to a first system 100a. That is, the mixing unit 640 may comprise a plurality of voice mixer units 644, wherein a number of voice mixer units 644 corresponds to a number of systems 100 included in the arrangement 30, and wherein each voice mixer unit 644 is configured to mix compressed speech signals that are to be transmitted to a different one of the systems 100.

The mixing unit 640 may further comprise a plurality of telephony mixer units 642. Each telephony mixer unit 642 of the plurality of telephony mixer units 642 is configured to receive a compressed speech signal from a different one of the systems 100. Such a compressed speech signal may be mixed with one or more other audio signals, e.g., audio signals (e.g., music, speech, or telephony signals) received from signal source 102. The resulting mixed signal may be transmitted to the signal source 102 and/or to the additional signal unit 660. The additional signal unit 660 may comprise a telephony unit 662 and a music source 664, for example. That is, the additional signal unit 660 may include further signal sources such as audio system(s) and/or telephony device(s). The additional signal unit 660, therefore, generally has a function similar to the signal source 102. According to some examples, the signal source 102 may be or may include a smartphone or tablet that is able to provide audio content and send and receive telephony signals, and the additional signal unit may be or may include an entertainment system (e.g., of a vehicle) that is also able to provide audio content and send and receive telephony signals independent from the signal source 102.

According to some examples, the connector unit 60 may be or may be part of an entertainment system in a vehicle. The music source 664 in this case may be an audio system of the vehicle (e.g., a radio or any other audio reproduction unit). Audio output from the music source 664 as well as output from the telephony unit 662 may be provided to a general mixer unit 646 included in the mixing unit 640. The general mixer unit 646 may mix the respective signals and provide a general mixed audio signal to the respective system 100 via the second communication channel 52. The different elements of the connector unit 60 as described with respect to Figure 4, however, are only examples. A connector unit 60 may generally be implemented in any suitable way. The connector unit 60 may mix different signals and forward the respective mixed signals to a respective system 100 of the two or more systems 100.

In Figure 4, only one system 100a of the two or more systems 100a, 100b, 100c is illustrated in detail. The different components of the connector unit 60 related to any further systems 100 of the plurality of systems 100a, 100b, 100c, may generally be implemented in the same way as has been described for the first system 100a. Connecting different systems 100 of a plurality of systems 100a, 100b, 100c via a connector unit 60 (star connection) may be advantageous, for example, in arrangements 30 comprising three or more systems 100. By connecting the different systems via a connector unit 60, the overall number of connections (first connections 50, and second connections 52) may be reduced.

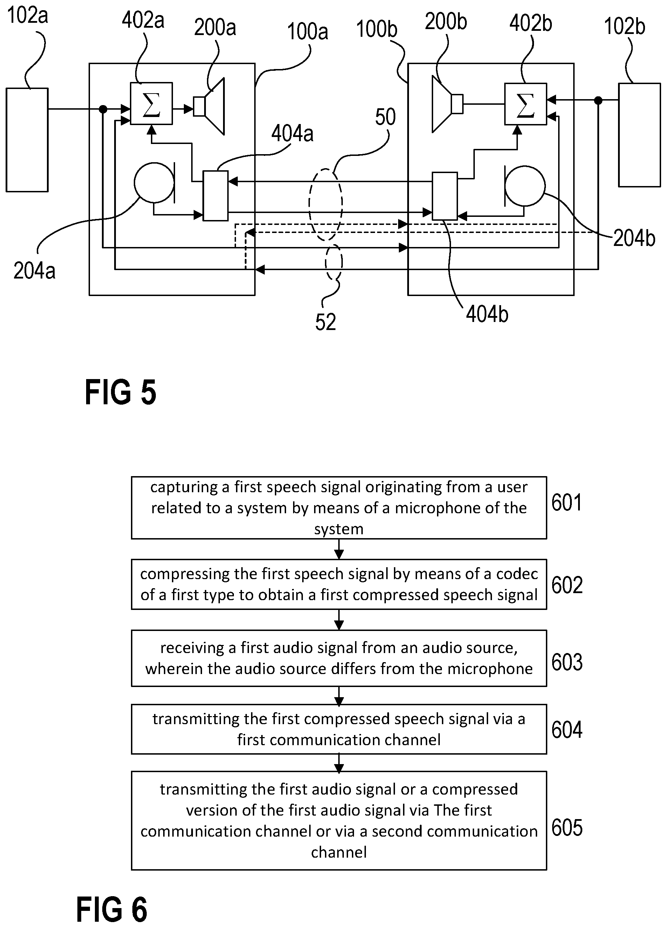

Now referring to Figure 5, it is however also possible that different systems 100 of the two or more systems 100a, 100b, 100c in an arrangement 30 according to embodiments of the disclosure are directly connected to each other. Figure 5 schematically illustrates a first system 100a that is directly connected to a second system 100b of the two or more systems 100. Each of the first and second system 100a, 100b is implemented as has been described with respect to Figure 3 above. The first system 100a is connected to the second system 100b via a first communication channel 50 and via a second communication channel 52. A separate direct connection via a first communication channel 50 and a second communication channel 52 would similarly be provided between the first system 100a and any other system 100 of the two or more systems 100, as well as between the second system 100b and any other system 100 of the two or more systems 100. A direct connection between the individual systems 100 of the two or more systems 100 may be advantageous, for example, if the number of systems 100 is low (e.g., up to three). By directly connecting individual systems 100 of the two or more systems 100 to each other, the additional costs and complexity of a connector unit 60 may be avoided and the overall costs and complexity of the arrangement 30 may be reduced.

An arrangement 30 according to embodiments of the disclosure comprises two or more systems for audio transmission 100 according to the embodiments described above arranged in a listening environment. As has been described with respect to Figure 5, according to some embodiments, the first communication channel 50 and the second communication channel 52 may directly connect a first system 100a of the two or more systems for audio transmission 100 to a second system 100b of the two or more systems for audio transmission 100. Alternatively, as has been described with respect to Figure 4, the arrangement 30 may further comprise a connector unit 60, wherein the first communication channel 50 and the second communication channel 52 directly connect a first system 100a of the two or more systems for audio transmission 100 to the connector unit 60. A second system 100b and any further systems 100 of the two or more systems 100 may be connected to the connector unit 60 in the same way. The listening environment may be a passenger compartment of a vehicle, a room, or a hall, for example. That is, the different systems 100 of the two or more systems are arranged within a defined distance from each other. For example, a maximum distance between two systems 100 of the two or more systems 100 may be 10m, 20m, or 50m, for example.

Now referring to Figure 6, a method for operating a system for audio transmission 100 according to embodiments of the disclosure is schematically illustrated. The system for audio transmission 100 comprises one or more loudspeakers 200, each of the one or more loudspeakers 200 being configured to radiate sound that corresponds to a sound signal towards at least one of two listening positions related to a user of the respective system 100, each of the two listening positions being located at an entrance of an ear canal of the respective user, and a microphone 204 configured to capture speech originating from a user related to the respective system 100. The method comprises capturing a first speech signal originating from a user related to the system 100 by means of the microphone 204 (step 601). At 602, the method comprises compressing the first speech signal by means of a codec of a first type to obtain a first compressed speech signal. At 603, the method further comprises receiving a first audio signal from a signal source 102, wherein the signal source 102 differs from the microphone 204. The method further comprises transmitting the first compressed speech signal via a first communication channel 50 (step 604), and transmitting the first audio signal or a compressed version of the first audio signal via the first communication channel 50 or via a second communication channel 52 (step 605).

The systems and methods described herein allow transmission of speech signals between different systems of an arrangement with low latency, and, at the same time, transmission of other audio signals is possible in a way that a listening experience of a user of the receiving system is highly satisfactory. The signals are transmitted via different communication channels and are only mixed for reproduction at the receiving system. In this way, an optimal codec can be used for each of the different types of audio (speech received via the microphone 204 of the system, and audio signals received from other signal sources 102.

It may be understood, that the illustrated systems are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements. The subject matter of the present disclosure includes all novel and non-obvious combinations and subcombinations of the various systems and configurations, and other features, functions, and/or properties disclosed. The following claims particularly point out subject matter from the above disclosure that is regarded as novel and non-obvious.

## Claims

1. A system for audio transmission (100) comprises
one or more loudspeakers (200), each of the one or more loudspeakers (200) being configured to radiate sound that corresponds to a sound signal towards at least one of two listening positions related to a user of the respective system (100), each of the two listening positions being located at an entrance of an ear canal of the respective user; and
a microphone (204) configured to capture speech originating from a user related to the respective system (100), wherein the system (100) is configured to
capture a first speech signal originating from the user related to the system (100) by means of the microphone (204),
compress the first speech signal by means of a codec of a first type to obtain a first compressed speech signal,
receive a first audio signal from a signal source (102), wherein the signal source (102) differs from the microphone (204),
transmit the first compressed speech signal via a first communication channel (50), and transmit the first audio signal or a compressed version of the first audio signal via the first communication channel (50) or via a second communication channel (52).

2. The system for audio transmission (100) of claim 1, wherein the codec of the first type is a low-latency codec.

3. The system for audio transmission (100) of claim 1 or 2, wherein the system (100) is further configured to compress the first audio signal by means of a codec of a second type that is different from the first type to obtain the compressed version of the first audio signal.

4. The system for audio transmission (100) of claim 3, wherein the codec of the second type is a low bandwidth codec.

5. The system for audio transmission (100) of any of the preceding claims, wherein the system (100) is further configured to
receive a second compressed speech signal via the first communication channel (50),
receive a second audio signal via the first communication channel (50) or via the second communication channel (52),
decompress the second compressed speech signal by means of the codec of the first type to obtain a second speech signal,
mix the second audio signal and the second speech signal to obtain a first mixed signal, and
reproduce the first mixed signal by means of the one or more loudspeakers (200).

6. The system for audio transmission (100) of any of claims 1 to 4, wherein the system (100) is further configured to
receive a second compressed speech signal via the first communication channel (50),
receive a compressed version of a second audio signal via the first communication channel (50) or via the second communication channel (52),
decompress the second compressed speech signal by means of the codec of the first type to obtain a second speech signal,
decompress the processed version of the second audio signal by means of the codec of the second type to obtain a second audio signal,
mix the second audio signal and the second speech signal to obtain a first mixed signal, and
reproduce the first mixed signal by means of the one or more loudspeakers (200).

7. The system of any of the preceding claims, wherein
the first communication channel (50) is an ultra-wideband, UWB, communication channel, and/or
the second communication channel (52) is a Bluetooth communication channel.

8. An arrangement (30) comprises two or more systems for audio transmission (100) according to any of claims 1 to 7 arranged in a listening environment.

9. The arrangement (30) of claim 8, wherein the first communication channel (50) and the second communication channel (52) directly connect a first system (100a) of the two or more systems for audio transmission (100) to a second system (100b) of the two or more systems for audio transmission (100).

10. The arrangement (30) of claim 8, further comprising a connector unit (60), wherein the first communication channel (50) and the second communication channel (52) directly connect a first system (100a) of the two or more systems for audio transmission (100) to the connector unit (60).

11. The arrangement (30) of any of claims 8 to 10, wherein the listening environment is a passenger compartment of a vehicle, a room, or a hall.

12. A method for operating a system for audio transmission (100), the system (100) comprising one or more loudspeakers (200), each of the one or more loudspeakers (200) being configured to radiate sound that corresponds to a sound signal towards at least one of two listening positions related to a user of the respective system (100), each of the two listening positions being located at an entrance of an ear canal of the respective user, and a microphone (204) configured to capture speech originating from a user related to the respective system (100), wherein the method comprises:
capturing a first speech signal originating from a user related to the system (100) by means of the microphone (204),
compressing the first speech signal by means of a codec of a first type to obtain a first compressed speech signal,
receiving a first audio signal from a signal source (102), wherein the signal source (102) differs from the microphone (204),
transmitting the first compressed speech signal via a first communication channel (50), and
transmitting the first audio signal or a compressed version of the first audio signal via the first communication channel (50) or via a second communication channel (52).
